Europäisches Patentamt

European Patent Office

Office européen des brevets

(19)

(11) Numéro de publication: **0 270 407**
**A1**

# (12) DEMANDE DE BREVET EUROPEEN

(21) Numéro de dépôt: **87402459.9**

(22) Date de dépôt: **02.11.87**

(51) Int. Cl.⁴: **C 03 C 1/00**
C 03 C 1/02

(30) Priorité: **12.11.86 FR 8615683**

(43) Date de publication de la demande:
**08.06.88 Bulletin 88/23**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Latourrette, Bertrand**
**2, allée des Erables Wattwiller**
**F-68700 Cernay (FR)**

**Magnier, Claude**
**3, rue des Chaufourniers**
**F-75019 Paris (FR)**

**Richard, Christian**
**28, avenue du Général Leclerc**
**F-58500 Clamecy (FR)**

(74) Mandataire: **Dubruc, Philippe et al**
**RHONE-POULENC INTERSERVICES Service Brevets**
**Chimie 25, quai Paul-Doumer**
**F-92408 Courbevoie Cédex (FR)**

(54) **Procédé de préparation de compositions précurseurs de compositions verrières.**

(57) L'invention concerne des compositions précurseurs de compositions verrières et leur procédé de fabrication.

Ce procédé est caractérisé en ce qu'il comporte au moins les étapes suivantes :

a) on fait réagir en continu d'une part une solution d'un silicate d'un métal alcalin et d'autre part une solution d'au moins un sel soluble d'un oxyde métallique choisi dans le groupe comprenant le plomb, le calcium, le baryum, le zinc, le magnésium ;

b) on sépare de la suspension ainsi obtenue une phase solide comprenant la composition précurseur et on sèche éventuellement cette phase solide.

EP 0 270 407 A1

**Description**

PROCEDE DE PREPARATION DE COMPOSITIONS PRECURSEURS DE COMPOSITIONS VERRIERES

La présente invention a pour objet un procédé de préparation en continu de précurseurs de compositions verrières.

On sait que, traditionnellement, pour faire des verres, on part de compositions sous forme pulvérulente qui correspondent à des mélanges d'oxydes.

La Demanderesse dans le brevet européen no 15 794 décrit un procédé consistant à apporter dans la composition tout l'oxyde formateur sous forme soluble en déterminant le rapport molaire du silicate de départ $SiO_2$/oxyde de métal alcalin en fonction du rapport molaire de la composition finale.

On permet ainsi une substitution de l'oxyde formateur par l'oxyde modificateur et on préserve la structure de l'élément formateurs dans le produit final.

Il en résulte un comportement surprenant de la composition obtenue lors de l'opération d'affinage. Cette opération qui est critique dans la transformation de la composition verrière peut-être effectuée à des températures inférieures à celles utilisées habituellement.

Par ailleurs, la Demanderesse a cherché à améliorer encore ce procédé pour diminuer les dépenses en énergie. Le brevet européen no 44 236 au nom de la Demanderesse décrit un procédé dans lequel la réaction est conduite dans un liquide organique polaire tel que le méthanol. Toutefois, l'utilisation de méthanol peut aussi poser des problèmes dans une mise en oeuvre industrielle.

L'objet de la présente invention est donc la mise au point d'un procédé encore plus simple dans sa mise en oeuvre industrielle permettant de faciliter notamment les étapes de filtration par rapport aux procédés décrits ci-dessus et d'obtenir cependant des compositions présentant les mêmes caractéristiques avantageuses que précédemment.

Le procédé de préparation selon l'invention d'une composition précurseur notamment de compositions verrières est caractérisé en ce qu'il comporte au moins les étapes suivantes :

    a) on fait réagir en continu d'une part un silicate d'un métal alcalin et d'autre part au moins un sel soluble d'un oxyde métallique choisi dans le groupe comprenant le plomb, le calcium, le baryum, le zinc, le magnésium ;

    b) on sépare de la suspension ainsi obtenue une phase solide comprenant la composition précurseur et on sèche éventuellement cette phase solide.

Par ailleurs, l'invention concerne aussi de nouvelles compositions précurseurs notamment de compositions verrières.

Ces compositions, selon l'invention, sont charactérisées en ce qu'elles sont à base de silicium, d'au moins un métal alcalin $M^1$ et au moins d'un élément $M^2$ choisi dans le groupe comprenant le plomb, le calcium, le magnésium, le baryum et le zinc, en ce qu'elles se présentent sous forme d'agglomérats sensiblement sphériques de taille moyenne comprise entre 10 et 40 $\mu m$, 95 % des particules présentant une taille comprise entre 0 et 100 $\mu m$, 50 % entre 10 et 30 $\mu m$ et en ce qu'elles présentent, lorsqu'elles sont soumises à une montée en température, une phase de densification entre environ 600° C et environ 750° C, cette phase de densification étant suivie d'une phase d'expansion pour une température comprise entre 750° C et leur température de fusion.

Par ailleurs, l'invention concerne aussi des compositions précurseurs de compositions verrières, caractérisées en ce qu'elles comprennent les éléments suivants, en pourcentage en poids :

$SiO_2$ : 45 - 70

PbO : 25 - 35

$Na_2O$ ou $K_2O$ : 5 - 20

et en ce qu'elles présentent un spectre RMN[29] Si ayant un premier pic du $^{29}$Si entre -80 et -90 ppm et un second pic du $^{29}$Si entre -105 et -115 ppm.

Le procédé de l'invention tel qu'il vient d'être défini est particulièrement simple puisqu'il peut ne comprendre qu'une seule étape permettant de préparer directement le produit recherché.

Par ailleurs, on s'est aperçu que la filtration de la suspension obtenue était particulièrement améliorée dans la cas du procédé de l'invention.

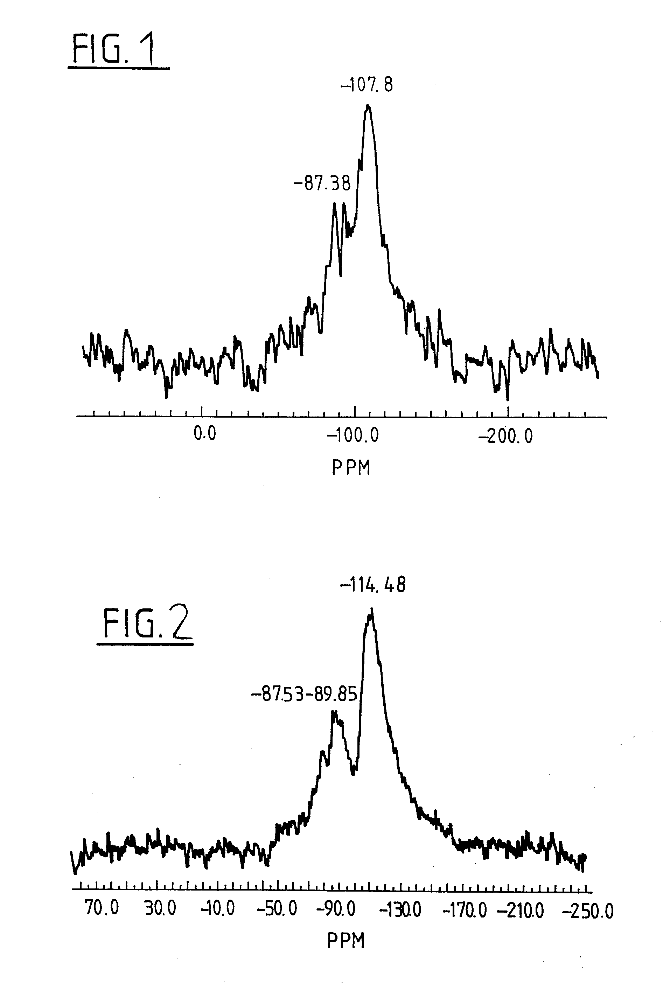

D'autres caractéristiques, détails et avantages de l'invention seront mieux compris à la lecture de la description, des exemples concrets non limitatifs qui vont suivre et du dessin annexé pour lequel les figures 1 et 2 représentent les spectres RMN[29]Si de deux compositions suivant l'invention.

Comme cela a été indiqué plus haut, les compositions selon l'invention peuvent se ranger dans un premier groupe dans lequel elles sont caractérisées par leur morphologie, leur granulomètrie et leur homogénéité chimique.

Elles sont en effet constituées d'agglomérats sphériques.

Par ailleurs, ces agglomérats présentent une taille moyenne comprise entre 10 et 40 $\mu m$. Toutes les mesures données ici et plus haut on été faites sur des produits après passage cinq minutes aux ultra-sons.

En outre, les compositions de ce premier groupe se caractérisent aussi par leur comportement lorsqu'elles sont soumises à un traitement thermique. En effet, ces compositions, lorsqu'elles sont soumises à une montée de température, présentent tout d'abord une phase de densification sur un espace de température relativement restreint situé entre environ 600° C et 750° C.

Cette phase de densification correspond à un phénomène de frittage et elle se fait dans le domaine de température relativement réduit décrit plus haut à cause de l'homogénéité due à leur mode de préparation.

Ensuite, lorsque la montée en température continue, c'est-à-dire pour des températures comprises entre environ 750° C et la température de fusion des compositions, celles-ci sont soumises à une phase d'expansion.

On notera enfin que le comportement thermique qui à été décrit ci-dessus a été mesuré sur un dilatomètre avec comme échantillon un barreau de poudre séché à 300° C et pressé sous 1 000 bars, de longueur 2 cm et de diamètre 0,5 cm et avec une vitesse de montée en température de 5 degrés par minute sur une gamme de température comprise entre 100° C et la température de fusion.

Par ailleurs, les compositions de l'invention peuvent comprendre les éléments suivants, en pourcentage en poids :

$SiO_2$ : 45 - 70

$M_2^1O$ :  5 - 25

$M^2O$ :  5 - 35

$M^1$ étant un alcalin et $M^2$ étant choisi dans le groupe comprenant Pb, Ca, Mg, Ba et Zn.

On notera que ces éléments sont exprimés en oxydes, selon l'habitude dans ce domaine technique, bien que dans le cas présent, cela ne semble pas refléter la réalité physico-chimique des compositions.

Il existe un second groupe particulier de compositions selon l'invention.

Ces compositions présentent d'une part les teneurs suivantes en pourcentage en poids $SiO_2$ : 45 - 70, PbO : 25 - 35, $Na_2O$ ou $K_2O$ : 5 - 20 et elles sont en outre caractérisées par un spectre RMN$^{29}$Si spécifique.

Ce spectre présente en effet un premier pic du $^{29}$Si entre -80 et -90 ppm et un second pic du $^{29}$Si entre -105 et -115 ppm. On peut attribuer le second pic au silicium de type $Q_4$, c'est-à-dire aux atomes de silicium liés à quatre autres atomes de silicium.

Le premier pic peut être considéré comme caractéristique de l'interconnection entre les réseaux silicium et plomb.

Les spectres RMN$^{29}$Si ont été établis pour l'étude du noyau $^{29}$Si dans les conditions expérimentales suivantes :

Appareil utilisé          CXP 300
Fréquence de résonance        59,7 MHz
Largeur spectrale        125 000 Hz
Séquence utilisée        Impulsions 90° C
Intervalle extra impulsions   4,0 s
Nombre d'impulsions          12 700
Rotation à l'angle magique   oui
Fréquence de rotation        3 KHz

Par ailleurs, les compositions de ce second groupe présentent les mêmes caractéristiques d'homogénéité, de granulométrie et de morphologie que celles du premier groupe. Toutes les valeurs données plus haut pour les tailles d'agglomérats s'appliquent ici.

Il en est de même pour le comportement thermique.

Les compositions de l'invention comportent aussi, de préférence, un agent affinant. On pourra utiliser tout agent affinant connu, tel que $Sb_2O_3$ ou $As_2O_3$ ou un nitrate de sel alcalin. La quantité de cet agent varie généralement entre 0,2 et 2 % en poids.

Le procédé de préparation des compositions ci-dessus va maintenant être décrit.

En ce qui concerne tout d'abord les produits de départ, on utilise un silicate d'un métal alcalin dont le rapport molaire Rm : $SiO_2$/Oxyde de métal alcalin peut présenter une valeur quelconque.

Ce silicate permet l'apport de l'élément formateur, le silicium, ainsi que des éléments "fondants", le sodium et le potassium.

On utilise par ailleurs un sel soluble d'un oxyde métallique. Il s'agit là des sels des éléments "modificateurs". Ces éléments peuvent être le calcium, le baryum, le magnésium, le plomb et le zinc. Tout sel soluble de ces éléments peut être utilisé. On peut citer ainsi les chlorures, les sels solubles organiques tels que les acétates mais, de manière avantageuse, on pourra utiliser les nitrates.

Selon la caractéristique essentielle de l'invention, on fait réagir en continu sous forme de solution les réactifs définis précédemment.

On entend ici par continu une introduction concommittante dans le milieu réactionnel des réactifs et avec un réglage des débits permettant d'avoir à chaque instant la stoechiométrie du produit final.

Selon un mode particulier de mise en oeuvre de l'invention, on maintient constant le pH du milieu réactionnel, ce pH pouvant être fixé à la valeur souhaitée et contrôlé en particulier par ajout d'acide et en fonction du Rm du silicate alcalin de départ. Cet acide pourra être par exemple l'acide nitrique. L'acide pourra être introduit dans le milieu réactionnel soit directement en même temps que les autres réactifs, soit avec le sel soluble de l'oxyde métallique, sous forme d'une solution acidifiée de ce sel.

La valeur du pH sera fonction du silicate formé. Généralement, cette valeur du pH est comprise entre 7,5 et 11 notamment entre 8 et 10,6 et plus particulièrement 9 et 10.

A titre d'exemple, dans le cas de l'utilisation de potassium et d'un sel de plomb, le pH sera maintenu à une valeur d'environ 9,5.

On obtient ainsi une suspension de laquelle on peut séparer une phase solide selon tout moyen connu.

On sépare généralement par filtration, notamment par filtration sous vide.

C'est le procédé continu de l'invention et notamment à pH constant qui permet l'obtention d'un précipité d'une morphologie particulière, constitué d'agglomérats sphériques, ces agglomérats présentent une granulométrie reserrée et une bonne homogénéité chimique. Grâce à cette morphologie et à cette homogénéité, la séparation en particulier par filtration se fait d'une manière particulièrement rapide.

La phase solide obtenue après la filtration peut être éventuellement lavée. Ce lavage peut être contrôlé de sorte à laisser un excés éventuel de nitrate dans le cas où les éléments modificateurs ont été introduits sous cette forme.

Si nécessaire, le produit solide est ensuite séché par exemple à l'étuve à 110° C.

Selon une variante particulière de l'invention, il est possible d'imprégner la phase solide issue de la filtration de l'étape b du procédé décrit plus haut avec les eaux-mères issues de cette même étape. Cette variante permet de compenser par imprégnation un éventuel déficit en oxyde de métal alcalin du gâteau de filtration.

Selon une autre variante de l'invention, il est aussi possible d'introduire dans le procédé un agent affinant tel que défini plus haut. Cet agent affinant peut être introduit soit dans le milieu réactionnel lors de la réaction en continu, soit par imprégnation de la phase soluble issue de la filtration de l'étape b.

A ce sujet, on notera que grâce au lavage contrôlé du gâteau de filtration mentionné plus haut et dans le cas de l'utilisation de nitrates, on peut laisser dans ce gâteau un excés de nitrate suffisant pour produire l'oxydation de l'affinant lors du traitement de fusion-affinage de la composition.

Par ailleurs, selon une variante particulière de l'invention, le procédé de préparation peut comporter une étape supplémentaire. En effet, il est possible d'ajouter à la phase solide et éventuellement séchée, issue de l'étape b décrite plus haut, une solution de silicate alcalin.

On obtient ainsi une seconde suspension.

De cette dernière suspension peut éventuellement être séparée une phase solide comprenant la composition précurseur qui, si cela est nécessaire, peut être séchée de préférence de façon homogène par exemple dans un atomiseur.

Cette variante qui vient d'être décrite permet de contrôler la teneur en sel résiduel sur le gâteau constituant la phase solide. Ceci peut être important pour certaines applications. On peut par exemple se ramener à une teneur inférieure à 2% dans le cas des nitrates. Ceci permet d'obtenir une composition s'affinant dans de meilleurs conditions.

Selon une autre variante de l'invention, on partira d'un silicate alcalin de rapport molaire Rm bien déterminé. On entend ici par rapport molaire Rm le rapport $SiO_2$/oxyde du métal alcalin. Ce rapport molaire doit être identique au rapport molaire Rm de la composition précurseur finale. Pour celle-ci le rapport molaire Rm correspond à la formule moles de $SiO_2$/somme des moles d'oxyde de métal alcalin et des moles des autres oxydes métalliques tels que par exemple PbO, CaO, MgO, BaO, ZnO.

Les compositions précurseurs préparées selon le procédé qui vient d'être décrit peuvent être utilisées pour l'obtention de compositions verrières notamment. Pour cela on leur fait subir un traitement thermique permettant leur fusion et leur affinage. Le traitement thermique précité peut se faire dans tout appareillage convenable. On pourra utiliser plus particulièrement un four électrique du type de celui décrit dans le brevet français no 2 523 115, c'est-à-dire un four à voûtes froides.

Selon un mode de réalisation particulier, on peut soumettre directement au traitement thermique de fusion-affinage la seconde suspension issue du procédé à deux étapes, décrit plus haut. Ce traitement peut se faire tout particulièrement dans le four à voûtes froides qui vient d'être mentionné. On règle la température du four à une valeur telle que la viscosité du verre obtenu soit suffisante pour permettre sa coulée à la sortie du four.

Dans tous les cas, les compositions verrières obtenues à l'issue du traitement peuvent être trempées à l'air ou à l'eau.

Des exemples concrets vont maintenant être donnés.

EXEMPLE 1

On introduit simultanément, en continu, dans un réacteur contenant 846 kg d'eau :
Silicate de potassium : 1 298 kg (% $SiO_2$ = 18,25
           % $K_2O$ = 7,7
           % $H_2O$ = 74,05)
Nitrate de plomb : 983 kg (% extrait sec = 19,5)
Acide Nitrique      13 kg (% $HNO_3$ = 69)

On opère en maintenant le pH à 9 ± 0,5.

On filtre la suspension obtenue et on obtient 1 479 kg d'un gâteau de filtration. Ce gâteau présente la composition suivante :
    $SiO_2$ =  237 kg
    PbO =  129 kg
    $K_2O$ =   63 kg
    $H_2O$ = 1 022 kg
    $N_2O_5$ =   28 kg
la perte au feu à 1 000° C est de 71 %.

Le gâteau obtenu est séché à 100°C: on obtient une composition de teneur suivante :
$SiO_2$ = 237 kg    47,7 %
PbO = 129 kg    26 %
$K_2O$ = 63 kg    12,6 %
$N_2O_5$ = 25 kg    5,5 %

Pour cet exemple, la vitesse de filtration dans un filtre sous vide est de 680 kg/h/m² de gâteau non séché.

Pour un produit de même composition finale synthétisé en discontinu, la vitesse de filtration sur le même filtre est de 200 kg/h/m² de gâteau non séché.

Le spectre RMN²⁹Si du produit de cet exemple est le spectre de la figure 1. Le produit se présente sous forme d'agglomérat de taille moyenne de 18 μm.

EXEMPLE 2

On veut préparer un verre de composition suivante (pourcentage en poids) :
    $SiO_2$ = 54,9
    $K_2O$ = 11,9
    PbO = 32,7
    Sb  = 0,5 (affinant)
    Rm  = 3,36 (3,66 avec le nitrate)

On amène une partie du $K_2O$ sous forme de nitrate de K afin d'oxyder $Sb_2O_3$ en $Sb_2O_5$ (16 % du $K_2O$ sous forme de $KNO_3$).

Pour ce faire, on part d'une solution de silicate de K, de Rm = 3,36.

Dans un réacteur de 2 000 cm³, sous agitation, on ajoute en continu, par heure,
    210 g d'une solution de silicate de potassium à 25 % d'extrait sec et de Rm = 3,36,
- et 161,5 g d'une solution aqueuse de nitrate de plomb à    30 % d'extrait sec, à 20° C, à pH constant à 8 ± 0,5.

On filtre en continu, le gâteau est lavé afin de laisser un excès de $KNO_3$ correspondant environ à 16 % du $K_2O$ total.

On recueille environ 206 g de gâteau par heure.

Le gâteau est séché à 150° C dans un secteur continu, puis mélangé avec 101,2 g de silicate de potassium et 0,5 g de $Sb_2O_3$. Cette suspension est introduite dans un four électrique, tel que décrit dans le FR 2 523 115. La température du four est réglée de telle sorte que la viscosité du verre soit suffisante pour permettre sa coulée à la sortie du four, soit 1 150° C environ. Le verre est refroidi par trempe à l'eau. Selon une variente, cette trempe est effectuée à l'air. On recueille une suspension.

EXEMPLE 3

On introduit simultanément en continu, dans un réacteur contenant 400 kg d'eau :
- silicate de Na     298 kg
(8,2 % $Na_2O$)
(18 % $SiO_2$)
- $Pb(NO_3)_2$     221 kg
(extrait sec = 30 %)

Le pH est égal à 10,6.

On filtre la suspension obtenue. Le gâteau de filtration est séché à 100°C. On obtient une composition de teneur suivante (pourcentage en poids) :

    $SiO_2$     56,8 %
    PbO     32%
    $Na_2O$     10,2 %

Pour cet exemple, la vitesse de filtration dans un filtre sous vide est de 450 kg/h/m². Pour un produit de composition finale préparé en discontinu, cette vitesse dans les mêmes conditions de filtration est de 200 kg/h/m².

Le spectre RMN$^{29}$Si du produit de cet exemple est le spectre de la figure 2.

Bien entendu, l'invention n'est nullement limitée aux modes de réalisation décrit qui n'ont été donné qu'à titre d'exemples. En particulier, elle comprend tous les moyens constituant des équivalents techniques des moyens décrits ainsi que leur combinaison si celle-ci sont mise en oeuvre dans la cas de la protection comme revendiquée.

## Revendications

1. Composition précurseur notamment de composition verrière, caractérisée en ce qu'elle est à base de silicium, d'au moins un métal alcalin $M^1$ et au moins d'un élément $M^2$ choisi dans le groupe comprenant le plomb, le calcium, le magnésium, le baryum et le zinc en ce qu'elle se présente sous forme d'agglomérats sensiblement sphériques de taille moyenne comprise entre 10 et 40 μm, 95 % des particules présentant une taille comprise entre 0 et 100 μm, 50 % entre 10 et 30 μm et en ce qu'elle présente, lorsqu'elle est soumise à une montée en température, une phase de densification entre environ 600° C et environ 750° C, cette phase de densification étant suivie d'une phase d'expansion pour une température comprise entre 750° C et sa température de fusion.

2. Composition selon la revendication 1, caractérisée en ce qu'elle comprend les éléments suivants, en pourcentage en poids :
    $SiO_2$ = 45 - 70

$$M_2^1O = 5 - 25$$

$$M^2O = 5 - 35$$

$M^1$ étant un alcalin, $M^2$ étant choisi dans le groupe défini précédemment.

3. Composition précurseur notamment de composition verrière, caractérisée en ce qu'elle comprend les éléments suivants en pourcentage en poids :
$SiO_2$ : 45 - 70
PbO : 25 - 35
$Na_2O$ ou $K_2O$ : 5 - 20
et en ce qu'elle présente un spectre RMN$^{29}$Si ayant un premier pic du $^{29}$Si entre -80 et -90 ppm et un second pic du $^{29}$Si entre -105 et -115 ppm.

4. Composition selon la revendication 3, caractérisée en ce qu'elle présente, lorsqu'elle est soumise à une montée en température, une phase de densification entre environ 600° C et environ 750° C, cette phase de densification étant suivie d'une phase d'expansion pour une température comprise entre 750° C et sa température de fusion.

5. Composition selon l'une des revendications 3 et 4, caractérisée en ce qu'elle se présente sous forme d'agglomérats sensiblement sphériques de taille moyenne comprise entre 10 et 40 μm, 95 % des particules présentant une taille comprise entre 0 et 100 μm, 50 % entre 10 et 30 %.

6. Composition selon l'une quelconque des revendications précédentes, caractérisée en ce qu'elle comprend un affinant, notamment dans une proportion variant entre 0,2 et 2 % en poids.

7. Procédé de préparation d'une composition précurseur notamment de compositions verrières, notamment du type selon les revendications 1 à 6, caractérisé en ce qu'il comporte au moins les étapes suivantes :
    a) on fait réagir en continu d'une part une solution d'un silicate d'un métal alcalin et d'autre part une solution d'au moins un sel soluble d'un oxyde métallique choisi dans le groupe comprenant le plomb, le calcium, le baryum, le zinc, le magnésium ;
    b) on sépare de la suspension ainsi obtenue une phase solide comprenant la composition précurseur et on sèche éventuellement cette phase solide.

8. Procédé selon la revendication 7, caractérisé en ce qu'en outre, on ajoute à la phase solide de l'étape b une solution de silicate alcalin, ce par quoi on obtient une seconde suspension et en ce qu'éventuellement on sépare de la seconde suspension ainsi obtenue une phase solide comprenant la composition précurseur et on sèche éventuellement cette phase solide.

9. Procédé selon la revendication 7 ou 8, caractérisé en ce qu'on utilise un silicate de potassium.

10. Procédé selon l'une des revendications 7 à 9, caractérisé en ce que, au cours de l'étape a, on maintient constant le pH du milieu réactionnel.

11. Procédé selon l'une des revendications 7 à 10, caractérisé en ce que l'on introduit un acide dans le milieu réactionnel lors de la réaction en continu de l'étape a.

12. Procédé selon la revendication 11, caractérisé en ce que cet acide est l'acide nitrique.

13. Procédé selon la revendication 11 ou 12, caractérisé en ce qu'on introduit l'acide avec le sel soluble d'un oxyde métallique précité.

14. Procédé selon l'une quelconque des revendications 7 à 13, caractérisé en ce que l'on imprègne la phase solide issue de la séparation de l'étape b avec les eaux-mères issues de cette même étape.

15. Procédé selon l'une quelconque des revendications 7 à 14, caractérisé en ce que l'on introduit un système affinant soit dans le milieu réactionnel lors de la réaction en continu, soit par imprégnation de la phase solide issue de la séparation de l'étape b.

16. Procédé selon l'une quelconque des revendications 7 à 15, caractérisé en ce que le rapport molaire Rm ($SiO_2$/oxyde de métal alcalin) du silicate alcalin de départ est identique au rapport molaire Rm de la composition précurseur finale, ce rapport répondant à la formule moles de $SiO_2$/somme des moles d'oxydes de métal alcalin et des oxydes métalliques.

17. Compositions précurseurs notamment de compositions verrières, caractérisé en ce qu'elles sont obtenues par le procédé selon l'une quelconque des revendications 7 à 16.

18. Procédé de préparation d'une composition verrière, caractérisé en ce que l'on fait subir à une composition précurseur, selon l'une des revendications 1 à 6 ou obtenue selon le procédé des revendications 7 à 16, un traitement thermique permettant sa fusion et son affinage.

19. Procédé selon les revendications 8 et 18, caractérisé en ce qu'on fait subir le traitement thermique à la seconde suspension précitée.

0270407

## FIG. 1

−107.8

−87.38

0.0    −100.0    −200.0

PPM

## FIG. 2

−114.48

−87.53 −89.85

70.0  30.0  −10.0  −50.0  −90.0  −130.0  −170.0 −210.0  −250.0

PPM

## Office européen des brevets

# RAPPORT DE RECHERCHE EUROPEENNE

Numero de la demande

EP  87 40 2459

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 543 530  (P. DUFOUR)<br>* Exemple 2; page 4, lignes 38,39 *<br>--- | 1-3,6,<br>18 | C 03 C    1/00<br>C 03 C    1/02 |
| X | FR-A-2 519 330  (P. DUFOUR)<br>* Revendications 1,5; exemple 1 *<br><br>----- | 1-3,7,9<br>,12-14,<br>17,18 | |

DOMAINES TECHNIQUES RECHERCHES (Int. Cl.4)

C 03 C    1/00

Le présent rapport a été établi pour toutes les revendications

| Lieu de la recherche | Date d'achèvement de la recherche | Examinateur |
|---|---|---|
| LA HAYE | 04-02-1988 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)